# EUROPÄISCHE PATENTSCHRIFT

(11) **EP 2 875 274 B1**
(45) Veröffentlichungstag und Bekanntmachung des Hinweises auf die Patenterteilung: **13.06.2018**
(21) Anmeldenummer: 13776963.4
(22) Anmeldetag: 09.10.2013
(51) Int. Cl.: F16L 37/084, F16L 37/091

(54) **ANSCHLUSSVORRICHTUNG FÜR MINDESTENS EINE FLUIDLEITUNG**
CONNECTING DEVICE FOR AT LEAST ONE FLUID CONDUIT
DISPOSITIF DE RACCORDEMENT POUR AU MOINS UNE CONDUITE DE FLUIDE

(30) Priorität: 03.11.2012 DE 102012021683
(43) Veröffentlichungstag der Anmeldung: 27.05.2015
(73) Patentinhaber: Festo AG & Co. KG, 73734 Esslingen (DE)
(72) Erfinder: WEISS, Martin, 73035 Göppingen (DE); DECKER, Andreas, 70825 Korntal (DE)
(74) Vertreter: Patentanwälte Magenbauer & Kollegen Partnerschaft mbB
(86) Internationale Anmeldenummer: PCT/EP2013/003033
(87) Internationale Veröffentlichungsnummer: WO 2014/067612

(56) Entgegenhaltungen:
- WO-A1-2010/052386
- DE-U1- 8 522 062
- GB-A- 1 550 624
- US-A- 3 018 785
- US-A- 5 058 907

## Beschreibung

Die Erfindung betrifft eine Anschlussvorrichtung gemäß den Oberbegriffen der Patentansprüche 1 und 6.

Eine aus der DE 10 2005 017 692 B3 bekannte Anschlussvorrichtung enthält eine durch Einpressen in einer Befestigungsöffnung eines Trägerbauteils fixierbare Anschlusseinheit, die über ein käfigartig strukturiertes, aus Metall bestehendes Halteelement verfügt, welches mehrere um eine Einstecköffnung herum verteilt angeordnete, radial bewegliche Halteabschnitte aufweist. Eine anzuschließende Fluidleitung kann in die von der Anschlusseinheit definierte Einstecköffnung axial eingesteckt werden und wird von den dadurch auseinandergespreizten Halteabschnitten am Außenumfang beaufschlagt und festgehalten. Zur Abdichtung ist eine von einem Lippendichtring gebildete ringförmige Dichtungsstruktur vorgesehen, die in der die Anschlusseinheit aufnehmenden Befestigungsöffnung koaxial vor dem Halteelement angeordnet ist und von an ihr anliegenden Stützbeinen des Halteelementes axial fixiert ist. Der Lippendichtring hat zwei Dichtlippen, die einen an der Innenumfangsfläche der Befestigungsöffnung unter Abdichtung anliegenden Außendichtungsabschnitt und einen am Außenumfang der eingesteckten Fluidleitung dichtend anliegenden Innendichtungsabschnitt bilden. Beim Zusammenbau der Anschlussvorrichtung wird zunächst der Lippendichtring und anschließend die Anschlusseinheit in die Befestigungsöffnung eingesetzt.

Diese bekannte Anschlussvorrichtung hat einen relativ komplexen Aufbau und ist deshalb verhältnismäßig teuer in der Herstellung und im Zusammenbau. Außerdem beansprucht die Anschlusseinheit ein relativ großes Bauvolumen.

Eine ähnlich aufgebaute Anschlussvorrichtung offenbart die DE 39 05 722 C2. Auch dort ist eine als Lippendichtring konzipierte ringförmige Dichtungsstruktur einem aus Metall bestehenden Halteelement koaxial vorgelagert.

Die EP 1 655 529 A1 offenbart eine Schnellkupplung, die über ein Rückhalteelement mit radial beweglichen Zähnen verfügt, an dem rückseitig mehrere axial wegragende Arme angeordnet sind, die zur axialen Fixierung des Rückhalteelementes dienen. Im Bereich der Arme ist das Rückhalteelement mit einem ringförmigen elastomeren Dichtungselement versehen, das durch Überspritzen der Arme mit dem Rückhalteelement verbunden ist.

Die DE 85 22 062 U1 beschreibt eine gemäß den Oberbegriffen der Patentansprüche 1 und 6 ausgebildete Steckkupplung, die ein Gehäuse aufweist, in das zwei Dichtungsteile eingesetzt sind. Jedes Dichtungsteil weist einen aus einem elastischen Material bestehenden Körper auf, in den ein Sicherungselement eingebettet ist, das aus einem Ringkörper und davon wegragenden Sicherungszähnen und Haltezähnen besteht. Die Sicherungszähne und die Haltezähne ragen aus dem elastischen Körper heraus, wobei die Sicherungszähne zum Festhalten des Dichtungsteils im Gehäuse und die Haltezähne zum Festhalten einer in das Dichtungsteil eingesteckten Fluidleitung dienen.

Aus der DE 101 62 657 B4 geht ein Anschlussstück für Fluidleitungen hervor, das eine mit Haltemitteln ausgestattete Anschlusseinheit aufweist, die sich als mehrteilige Baugruppe in einer Gehäuseöffnung montieren lässt. An einer Stirnseite dieser Baugruppe ist ein Dichtungsring befestigt, der zur Abdichtung gegenüber einem die Anschlusseinheit aufnehmenden Gehäuse und einer in die Anschlusseinheit eingesteckten Fluidleitung dient.

Der Erfindung liegt die Aufgabe zugrunde, eine kompakt bauende Anschlussvorrichtung zu schaffen, die einfach und kostengünstig herstellbar und montierbar ist und eine verbesserte Abdichtung ermöglicht.

Diese Aufgabe wird bei einer Anschlussöffnung nach dem Oberbegriff des Patentanspruches 1 dadurch gelöst, dass die Dichtungsstruktur von einem unmittelbar bei seiner Herstellung durch Spritzgießen unter Abdichtung stoffschlüssig an das Halteelement angeformten gummielastischen Spritzgusskörper gebildet ist, wobei der Innendichtungsabschnitt mindestens eine innen an den Halteabschnitten angeordnete, radial nach innen vorstehende ringförmige Dichtlippe aufweist, die am Außenumfang der eingesteckten Fluidleitung abdichtend anliegt.

Alternativ wird die Aufgabe bei einer Anschlussvorrichtung nach dem Oberbegriff des Patentanspruches 6 dadurch gelöst, dass die Dichtungsstruktur von einem unmittelbar bei seiner Herstellung durch Spritzgießen unter Abdichtung stoffschlüssig an das Halteelement angeformten gummielastischen Spritzgusskörper gebildet ist, wobei der Außendichtungsabschnitt einen entgegengesetzt zur Einsteckrichtung der Fluidleitung in der axialen Richtung der Anschlusseinheit orientierten ringförmigen Dichtvorsprung aufweist, der in der Gebrauchsstellung an dem Trägerbauteil axial abdichtend anliegt.

Durch die Integration der ringförmigen Dichtungsstruktur in die Anschlusseinheit, verringert sich der logistische Aufwand beim Zusammenbau der Anschlussvorrichtung und auch der Zeitaufwand beim Montagevorgang als solches. Gleichwohl gestaltet sich die Herstellung der Anschlusseinheit unter Gewährleistung einer hohen Qualität sehr kostengünstig, weil die Dichtungsstruktur im Rahmen eines Spritzgießvorganges unmittelbar bei ihrer Herstellung an das Halteelement angeformt und stoffschlüssig daran gehalten wird. Dementsprechend erübrigen sich separate Montagevorgänge zum Anbringen einer vorgefertigten Dichtungsstruktur an einem ebenfalls vorgefertigten Halteelement. Problematische Toleranzen beim Verbinden des Halteelementes mit der Dichtungsstruktur werden reduziert und es kann eine gleichbleibend hohe Fertigungsqualität gewährleistet werden. Dadurch, dass zumindest der ringförmige Innendichtungsabschnitt an den radial beweglichen Halteabschnitten angeformt ist, kann er die Abdichtung bezüglich der eingesteckten Fluidleitung in unmittelbarer Nähe derjenigen Stelle ausführen, an der das Halteelement seine Haltefunktion bezüglich der Fluidleitung ausübt, was eine sichere Abdichtung gewährleistet. Indem die Dichtungsstruktur die zwischen benachbarten Halteabschnitten vorhandenen Zwischenräume abdichtend überbrückt, ist unabhängig von Durchmessertoleranzen der festzuhaltenden Fluidleitung für eine sichere Abdichtung gesorgt. Außerdem kann das die Dichtungsstruktur beaufschlagende Druckfluid die Klemmkraft der die eingesteckte Fluidleitung festhaltenden Halteabschnitte verstärken. Durch das Anspritzen der Dichtungsstruktur an das Halteelement erübrigen sich überdies aufwändige Befestigungsstrukturen, so dass der Platzbedarf gering ist und für die Installation der Anschlusseinheit ein nur kleiner Einbauraum benötigt wird.

Bei der Anschlussvorrichtung gemäß Patentanspruch 1 verfügt der Innendichtungsabschnitt über mindestens eine radial nach innen vorstehende ringförmige Dichtlippe, die am Außenumfang der eingesteckten Fluidleitung abdichtend anliegt. Eine solche Dichtlippe verfügt über eine eigenständige Elastizität, so dass sie sich unabhängig von dem zwischen den Halteabschnitten und der Fluidleitung auftretenden Klemmkontakt bestmöglich an den Außenumfang der Fluidleitung anschmiegen kann.

Bei der Anschlussvorrichtung gemäß Patentanspruch 6 verfügt der Außendichtungsabschnitt über einen entgegengesetzt zur Einsteckrichtung der Fluidleitung orientierten ringförmigen Dichtvorsprung, der in der Gebrauchsstellung der Anschlusseinheit an dem Trägerbauteil axial abdichtend anliegt. Eine solche Ausgestaltung hat insbesondere den Vorteil, dass der Außendichtungsabschnitt von dem im Innern der Anschlussvorrichtung herrschenden Fluiddruck aktiv an das Trägerbauteil angedrückt werden kann und die Abdichtung dadurch intensiviert wird.

Vorteilhafte Weiterbildungen der Erfindung gehen aus den Unteransprüchen hervor.

Der Innendichtungsabschnitt befindet sich zweckmäßigerweise an den der Einstecköffnung zugewandten, insbesondere schräg bezüglich der Längsachse der Einstecköffnung verlaufenden Innenflächen der Halteabschnitte. Auf diese Weise wird die Fluidleitung beim Einstecken in die Einstecköffnung zuerst durch die Dichtungsstruktur hindurchgeschoben und gelangt erst anschließend in Kontakt mit den Halteabschnitten. Dadurch wirken sich Riefen oder andere Beeinträchtigungen der Oberfläche der Fluidleitung, die von den Halteabschnitten eventuell hervorgerufen werden, nicht nachteilig auf die Abdichtfunktion der Dichtungsstruktur aus.

Der Außendichtungsabschnitt ist zweckmäßigerweise am Außenumfang des Halteelementes angeformt, vorzugsweise unmittelbar axial im Anschluss an die Halteabschnitte. Dies hat den Vorteil, dass der Außendichtungsabschnitt in gewisser Weise von den Radialbewegungen der Halteabschnitte entkoppelt ist.

Zweckmäßigerweise ist der Dichtvorsprung Bestandteil einer am Außenumfang der Anschlusseinheit ausgebildeten Befestigungsnut, mit deren Hilfe die Anschlusseinheit an einem Trägerbauteil fixierbar ist, insbesondere durch eine Schnappverbindung.

Zweckmäßigerweise sind die Halteabschnitte des Halteelementes ringsum vollständig von der gummielastischen Dichtungsstruktur umhüllt. Derartig in die Dichtungsstruktur eingebettet, sind die Fügebereiche zwischen der Dichtungsstruktur und den Haltearmen unzugänglich abgeschirmt, was ein Eindringen des von der anzuschließenden Fluidleitung zu führenden Fluides verhindert. Zweckmäßigerweise sind an den Halteabschnitten des Halteelementes Klemmkanten ausgebildet, die am Außenumfang der eingesteckten Fluidleitung zum Zwecke deren Festhaltens klemmend anliegen. Auch diese Klemmkanten können von der Dichtungsstruktur mit bevorzugt nur einem dünnen Materialfilm umhüllt sein. Alternativ können diese Klemmkanten allerdings auch frei liegen, so dass sie optimal mit der Fluidleitung kooperieren können.

Die Anschlusseinheit setzt sich zweckmäßigerweise aus dem schon erwähnten Klemmelement und einem das Klemmelement zumindest partiell umhüllenden einstückigen gummielastischen Hüllkörper zusammen. Die Dichtungsstruktur ist hierbei ein einstückiger Bestandteil dieses Hüllkörpers, der unmittelbar bei seiner Herstellung durch Spritzgießen unter Abdichtung stoffschlüssig an das Halteelement angeformt wurde. Dieser Hüllkörper kann das Klemmelement auch noch in solchen Bereichen umhüllen beziehungsweise abdecken, die von der Dichtungsstruktur nicht erfasst werden.

Als besonders zweckmäßig wird eine Bauform angesehen, bei der das Halteelement, einschließlich oder abgesehen von den schon erwähnten Klemmkanten der Halteabschnitte, ringsum zumindest annähernd vollständig von dem Hüllkörper umhüllt ist.

Der Hüllkörper ist zweckmäßigerweise derart geformt, dass er im Bereich des Außenumfanges der Anschlusseinheit ein koaxial zu dem Klemmelement angeordnetes Befestigungsmittel ausbildet. Ein solches Befestigungsmittel ist beispielsweise in Form eines Ringvorsprunges oder vorzugsweise in Form einer radial nach außen hin offenen ringförmigen Befestigungsnut ausgebildet. Bei einer Ausgestaltung als Befestigungsnut lässt sich die Anschlusseinheit bequem mittels einer Schnappverbindung an einem Trägerbauteil fixieren. Das Trägerbauteil benötigt hier lediglich einen im Bereich der Einstecköffnung angeordneten und bevorzugt ringförmigen Radialvorsprung, an dem die Anschlusseinheit mittels ihrer Befestigungsnut im Rahmen einer Schnappverbindung festlegbar ist.

Bei einer bevorzugten Ausgestaltung verfügt das Halteelement über einen der Einsteckseite der Einstecköffnung zugeordneten ringförmigen Kopfabschnitt, von dem mehrere mit gegenseitigem Abstand um die Einstecköffnung herum verteilte Haltearme axial wegragen, die in der Gebrauchsstellung der Anschlusseinheit axial ins Innere der Befestigungsöffnung ragen. Die Haltearme definieren insbesondere mit ihren Endabschnitten jeweils einen der radial beweglichen Halteabschnitte. Bevorzugt sind sie insgesamt bezüglich des Kopfabschnittes jeweils radial federelastisch verformbar. Die erforderliche Elastizität ergibt sich in Verbindung mit einer hohen Festigkeit insbesondere im Falle einer Ausgestaltung als Metallelement, das zweckmäßigerweise aus Stahl, bevorzugt Edelstahl besteht. Besonders einfach und kostengünstig lässt sich das Halteelement als Stanzbiegeteil herstellen.

Bei der vorgenannten Ausführungsform ist es vorteilhaft, wenn das schon erwähnte, zur Fixierung in der Befestigungsöffnung eines Trägerbauteils nutzbare Befestigungsmittel in einem Bereich des Halteelementes liegt, der im Bereich der Haltearme axial zwischen den Halteabschnitten und dem Kopfabschnitt liegt. In diesem Bereich ist das Halteelement aufgrund der radialen elastischen Nachgiebigkeit der Haltearme besonders flexibel, was die Herstellung einer Schnapp- beziehungsweise Rastverbindung mit einem Trägerbauteil sehr begünstigt. Man kann die Anschlusseinheit hier so gestalten, dass sie sehr einfach durch axiales Eindrücken von Hand in einer Befestigungsöffnung montierbar ist. Ein aufwändiges maschinelles Einpressen oder ein Bördeln oder auch ein Einschrauben erübrigt sich hier. Auch lässt sich die Anschlusseinheit unabhängig vom Material des Trägerbauteils stets zuverlässig fixieren.

Die Anschlussvorrichtung kann in ihrer einfachsten Variante derart ausgebildet sein, dass eine eingesteckte Fluidleitung quasi unlösbar festgehalten wird, indem der Anschlusseinheit keine Lösemittel zugeordnet sind, mit deren Hilfe sich die eingesteckte Fluidleitung von dem durch die Halteabschnitte ausgeübten Haltegriff leicht befreien lässt. Hiervon abweichend verfügt eine komfortablere Anschlussvorrichtung über eine der Anschlusseinheit zugeordnete Lösehülse, die von Hand axial verschiebbar ist, um auf die Halteabschnitte einzuwirken und selbige vom Außenumfang der eingesteckten Fluidleitung abzuheben. Die eingesteckte Fluidleitung kann dann bequem wieder entfernt werden, ohne die Anschlusseinheit demontieren zu müssen.
Besonders zweckmäßig ist es, wenn eine eventuell vorhandene Lösehülse derart in die Anschlusseinheit integriert ist, dass sie von einem gleichzeitig die Dichtungsstruktur bildenden gummielastischen Hüllkörper der Anschlusseinheit umschlossen ist, der die Lösehülse unverlierbar an der Anschlusseinheit festhält. Aufgrund der Gummielastizität des Hüllkörpers wird dadurch die für den Lösevorgang erforderliche axiale Beweglichkeit der Lösehülse nicht beeinträchtigt. Bevorzugt ist die Lösehülse mittels einer Schnappverbindung an dem Hüllkörper fixiert.

In einem die Anschlussvorrichtung aufnehmenden Trägerbauteil ist zweckmäßigerweise ein Fluidkanal ausgebildet, der mit der Befestigungsöffnung kommuniziert. Der in einer Fluidleitung ausgebildete Leitungskanal steht somit bei angeschlossener Fluidleitung mit dem Fluidkanal des Trägerbauteil in Verbindung.
Die Anschlussvorrichtung ist bei einer möglichen Ausführungsform als Anschlussstück konzipiert, das sich an einem fluidtechnischen Gerät, beispielsweise ein Ventil oder ein Antrieb, fixieren lässt, um an diesem fluidtechnischen Gerät mindestens eine Fluidleitung anschließen zu können. Darüber hinaus besteht allerdings auch die Möglichkeit, unmittelbar einen Bestandteil eines fluidtechnischen Gerätes, beispielsweise dessen Gerätegehäuse, als Trägerbauteil zu nutzen, in dem die Befestigungsöffnung ausgebildet ist und in dem die Anschlusseinheit fixiert wird. In diesem Falle kann auf ein gesondertes Trägerbauteil zur Einsparung von Kosten verzichtet werden.

Allen Ausführungsformen ist gemeinsam, dass durch den im Bereich der radial beweglichen Halteabschnitte angeformten Innendichtungsabschnitt eine Unterstützung der von den Halteabschnitten auf die Fluidleitung ausgeübten Haltekraft durch den Fluiddruck des in der Fluidleitung strömenden Druckfluides unterstützt wird. Die Haltekraft ist umso höher, je höher der Fluiddruck ist. Dies bietet eine unabhängig vom Systemdruck sehr sichere Abdichtung.

Schließlich lassen sich bei der erfindungsgemäßen Anschlussvorrichtung bei Bedarf problemlos Formgebungen realisieren, die sehr reinigungsfreundlich sind, was den Einsatz in Bereichen begünstigt, in denen aufgrund bestehender Hygieneanforderungen regelmäßige Reinigungsvorgänge notwendig sind.

Nachfolgend wird die Erfindung anhand der beiliegenden Zeichnung näher erläutert. In dieser zeigen:
- Figur 1: eine bevorzugte Ausführungsform der erfindungsgemäßen Anschlussvorrichtung in einem Längsschnitt, wobei eine angeschlossene Fluidleitung nur gestrichelt angedeutet ist,
- Figur 2: die bei der Anschlussvorrichtung der Figur 1 vorhandene Anschlusseinheit in einer Einzeldarstellung in Seitenansicht,
- Figur 3: die Anschlusseinheit aus Figur 2 im Längsschnitt gemäß Schnittlinie III-III aus Figur 2,
- Figur 4: ein in der Anschlusseinheit aus Figuren 1 bis 3 integriertes krallenförmiges Halteelement in einer Einzeldarstellung in Seitenansicht,
- Figur 5: einen Ausschnitt der Anschlusseinheit aus Figuren 1 bis 3 im Bereich der in Figur 3 mit Pfeil V markierten Dichtungsstruktur in einem perspektivischen Längsschnitt,
- Figur 6: die Anschlussvorrichtung aus Figur 1 in einem Zustand vor der Montage der Anschlusseinheit und vor dem Einstecken einer Fluidleitung, wobei das in der Anschlusseinheit integrierte und von einem gummielastischen Hüllelement umschlossene Halteelement auch nochmals separat illustriert ist, und
- Figur 7: in einer der Figur 1 entsprechenden Längsschnittdarstellung eine modifizierte Ausführungsform der Anschlussvorrichtung, die anders als das erste Ausführungsbeispiel mit einer Lösehülse ausgestattet ist.

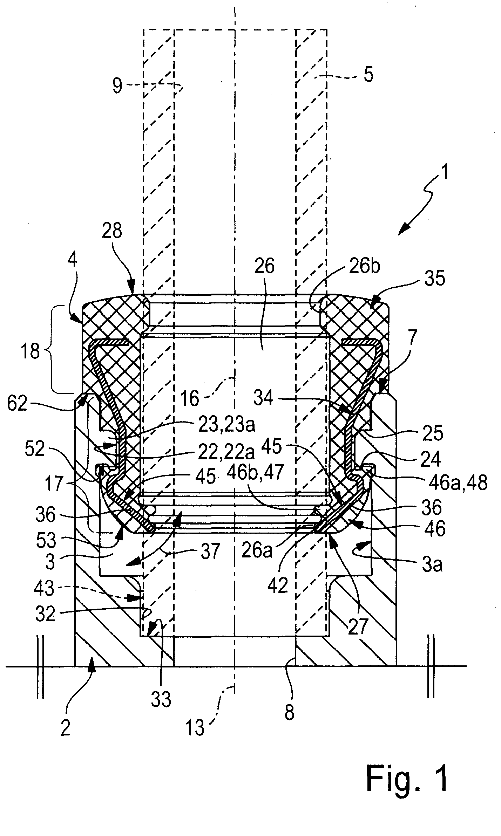

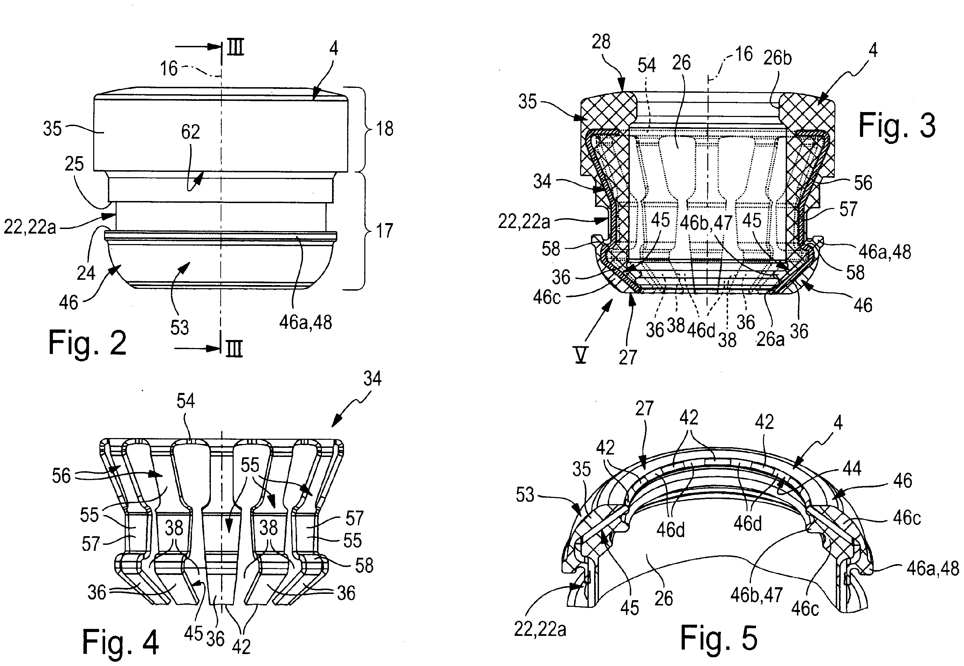

Die anhand der Figuren 1 bis 6 illustrierte Anschlussvorrichtung 1 enthält eine Anschlusseinheit 4, die in ihrer Gebrauchsstellung in eine Befestigungsöffnung 3 eines Trägerbauteils 2 eingreift und in dieser Befestigungsöffnung 3 befestigt ist. Die Anschlussvorrichtung 1 eignet sich zum Anschließen einer Fluidleitung 5, die zum Hindurchleiten eines fluidischen Druckmediums wie Druckluft oder Druckflüssigkeit ausgebildet ist. Bevorzugt handelt es sich bei der anschließbaren Fluidleitung 5 um einen flexiblen Schlauch. Gleichwohl kann es sich bei ihr auch um ein starres Rohr handeln. In der Figur 1 ist eine Fluidleitung 5 im angeschlossenen Zustand gezeigt.

Bereits die Anschlusseinheit 4 bildet zweckmäßigerweise die Anschlussvorrichtung 1. Sie kann mit jedem beliebigen Trägerbauteil 2, das über eine geeignet gestaltete Befestigungsöffnung 3 verfügt, kombiniert werden. Vorhandene Trägerbauteile 2 können somit nach Bedarf mit einer oder mehreren Anschlusseinheiten 4 ausgerüstet werden.

Andererseits kann die Anschlussvorrichtung 1 auch als Baugruppe ausgeführt sein, die sich aus mindestens einer Anschlusseinheit 4 und einem Trägerbauteil 2 mit mindestens einer an die Anschlusseinheit 4 angepassten Befestigungsöffnung 3 zusammensetzt. Dabei kann die Anschlusseinheit 4 schon ab Werk bei der Auslieferung am Trägerbauteil 2 in ihrer Gebrauchsstellung montiert sein oder sie kann als lose Beigabe beiliegen, die erst vom Anwender mit dem Trägerbauteil 2 vereinigt wird.

Die Anschlussvorrichtung 1 ist bei einem möglichen Ausführungsbeispiel als Anschlussstück konzipiert, bei dem das Trägerbauteil 2 mindestens eine nicht weiter illustrierte Befestigungsschnittstelle aufweist, mit der es und somit das Anschlussstück in seiner Gesamtheit an einer fluidtechnischen Komponente fixierbar ist, beispielsweise an einem Ventil, einem fluidbetätigten Antrieb oder einem Druckluft-Wartungsgerät. Bei entsprechender Ausgestaltung der Befestigungsschnittstelle lässt sich daran auch eine weitere Fluidleitung fixieren. Das Anschlussstück kann ohne weiteres mehrere Anschlusseinheiten 4 enthalten, um beispielsweise ein Winkelstück oder ein zum gleichzeitigen Anschließen mehrerer Fluidleitungen geeignetes T-Stück zu realisieren.

Bei einem anderen Ausführungsbeispiel ist das Trägerbauteil 2 direkt von einem Bestandteil einer fluidtechnischen Komponente der oben genannten Art gebildet, beispielsweise vom Gehäuse der fluidtechnischen Komponente. Auf diese Weise erübrigt sich ein eigenständiges, separates Trägerbauteil 2.

Die in dem Trägerbauteil 2 nach Art einer Ausnehmung ausgebildete Befestigungsöffnung 3 mündet zu einer im Folgenden als Vorderfläche 7 bezeichneten Außenfläche des Trägerbauteils 2 aus. Im Innern des Trägerbauteils 2 schließt sich an die Befestigungsöffnung 3 insbesondere koaxial ein Fluidkanal 8 an, mit dem ein die Fluidleitung 5 durchsetzender Leitungskanal 9 bei angeschlossener Fluidleitung 5 in Fluidverbindung steht. Von dem Trägerbauteil 2 ist in der Zeichnung nur ein Ausschnitt gezeigt.

Die Anschlusseinheit 4 ist manschettenförmig strukturiert und hat einen ringförmigen Querschnitt quer zu ihrer Längsachse 16. Sie ragt durch die an der Vorderfläche 7 befindliche Mündung 14 der Befestigungsöffnung 3 hindurch unter koaxialer Ausrichtung in die Befestigungsöffnung 3 hinein. Grundsätzlich kann die Anschlusseinheit 4 dabei über ihre gesamte Länge in der Befestigungsöffnung 3 aufgenommen sein. Eine vereinfachte Handhabung, insbesondere auch im Falle eines notwendigen Entfernens der Anschlusseinheit 4, ist jedoch beim Ausführungsbeispiel damit verbunden, dass die Anschlusseinheit 4 nur mit einem Teil ihrer axialen Länge in der Befestigungsöffnung 3 aufgenommen ist, wobei der in der Befestigungsöffnung 3 aufgenommene Längenabschnitt im Folgenden auch als Innenabschnitt 17 bezeichnet wird. Außerhalb der Befestigungsöffnung 3 befindet sich ein als Außenabschnitt 18 bezeichneter Längenabschnitt der Anschlusseinheit 4, welcher sich zweckmäßigerweise an der Vorderfläche 7 rings um die Mündung 14 herum abstützt.

Die Montage der Anschlusseinheit 4 in ihrer Gebrauchsstellung erfolgt zweckmäßigerweise im Rahmen eines Einsteckvorganges.

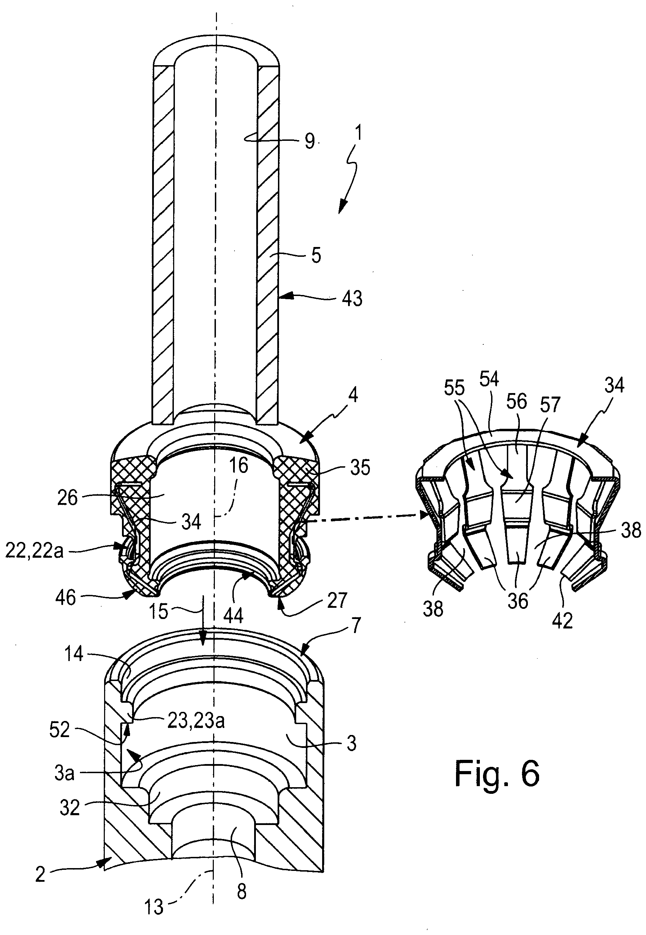

Gemäß der Illustration in Figur 6 wird hierbei die Anschlusseinheit 4 mit vorauseilendem Innenabschnitt 17 in einer durch einen Pfeil angedeuteten Montagerichtung 15 durch die Mündung 14 hindurch in die Befestigungsöffnung 3 eingesteckt. Die Montagerichtung 15 fällt mit der Achsrichtung der Längsachse 16 zusammen.

Zur Fixierung in der Befestigungsöffnung 3 weist die Anschlusseinheit 4 an ihrem Außenumfang mindestens ein Befestigungsmittel 22 auf, das mit dem Trägerbauteil 2 und hierbei insbesondere mit mindestens einem zugeordneten Gegenbefestigungsmittel 23 kooperiert. Bevorzugt besteht das Befestigungsmittel 22 aus einer im Folgenden als Befestigungsnut 22a bezeichneten Ringnut, die sich konzentrisch rings um die Anschlusseinheit 4 erstreckt und die radial nach außen hin offen ist. Das Gegenbefestigungsmittel 23 besteht hierbei zweckmäßigerweise aus mindestens einem am Innenumfang der Befestigungsöffnung 3 an dem Trägerbauteil 2 ausgebildeten und radial nach innen ragenden Befestigungsvorsprung 23a, der in die Befestigungsnut 22a eingreift. Bei dem Befestigungsvorsprung 23a handelt es sich insbesondere um einen zu der Längsachse 16 konzentrischen Ringvorsprung.

Die Befestigungsnut 22a ist seitlich von zwei einander zugewandten Nutflanken begrenzt, von denen die axial tiefer in der Befestigungsöffnung 3 liegende Nutflanke als innere Nutflanke 24 und die axial weiter außen liegende Nutflanke als äußere Nutflanke 25 bezeichnet sei. Mit diesen beiden Nutflanken 24, 25 stützt sich die Anschlusseinheit 4 axial beidseits an dem mindestens einen Befestigungsvorsprung 23a ab und ist dadurch axial im Wesentlichen unbeweglich bezüglich des Trägerbauteils 2 befestigt.

Die manschettenförmig ausgebildete Anschlusseinheit 4 ist zentral in axialer Richtung durchbrochen, wobei diese Durchbrechung im Folgenden aufgrund ihrer Funktion als Einstecköffnung 26 bezeichnet sei. Die Einstecköffnung 26 mündet einerseits mit einer inneren Mündungsöffnung 26a an einer im Innern der Befestigungsöffnung 3 liegenden und axial ins Innere der Befestigungsöffnung 3 weisenden axialen Innenfläche 27 der Anschlusseinheit 4 aus. Andererseits mündet die Einstecköffnung 26 hierzu axial entgegengesetzt mit einer äußeren Mündungsöffnung 26b an einer außerhalb der Befestigungsöffnung 3 liegenden und axial von der Befestigungsöffnung 3 wegweisenden axialen Außenfläche 28 der Anschlusseinheit 4 aus.

Zum Anschließen der Fluidleitung 5 wird die Fluidleitung 5 durch die äußere Mündungsöffnung 26b in die Befestigungsöffnung 3 eingeschoben, bis sie an der inneren Mündungsöffnung 26a wieder austritt. Die Befestigungsöffnung 3 weist in ihrem Innern, insbesondere axial beabstandet zu der inneren Mündungsöffnung 26a, bevorzugt einen Zentrierabschnitt 32 auf, dessen Durchmesser an den Außendurchmesser der Fluidleitung 5 angepasst ist, so dass die eingesteckte Fluidleitung 5 mit ihrem vorderen Endabschnitt darin zentriert aufgenommen wird. Der Zentrierabschnitt 32 bildet gleichzeitig eine der Anschlusseinheit 4 zugewandte axiale Anschlagfläche 33 zur Begrenzung der Einstecktiefe der Fluidleitung 5.

Die Anschlusseinheit 4 setzt sich aus einem ringförmig strukturierten Halteelement 34 und einem das Halteelement 34 ringsum zumindest partiell umhüllenden, aus Material mit gummielastischen Eigenschaften bestehenden Hüllkörper 35 zusammen. Der Hüllkörper 35 ist ein aus Kunststoffmaterial bestehender Spritzgusskörper, wobei das verwendete Kunststoffmaterial insbesondere ein Elastomermaterial ist. Eine Besonderheit besteht darin, dass der Hüllkörper 35 unmittelbar bei seiner Spritzgießherstellung an das zuvor bereitgestellte Halteelement 34 unter Eingehen einer stoffschlüssigen Verbindung angeformt ist. Zwischen dem Material des Hüllkörpers 35 und demjenigen des Halteelementes 34 liegt auf diese Weise ohne speziell zu verwendende Befestigungselemente eine innige, auch eine Abdichtung bewirkende Haftverbindung vor. Beide Bestandteile, der Hüllkörper 35 und das Halteelement 34, bilden eine nur einheitlich handhabbare Baueinheit in Gestalt der Anschlusseinheit 4.

Das Halteelement 34 ist koaxial zu der Längsachse 16 angeordnet und enthält eine Mehrzahl von Halteabschnitten 36, die rings um die Längsachse 16 und mithin um die Einstecköffnung 26 herum verteilt sind. Die Halteabschnitte 36 sind bezüglich der Längsachse 16 unter Ausführung einer durch einen Doppelpfeil angedeuteten Arbeitsbewegung 37 radial beweglich. Die Arbeitsbewegung 37 ist insbesondere eine Schwenkbewegung, bevorzugt in jeweils einer die Längsachse 16 enthaltenden Schwenkebene. Zwischen in der Umfangsrichtung der Längsachse 16 jeweils benachbarten Halteabschnitten 36 ist jeweils ein Zwischenraum 38 vorhanden, der eine gegenseitige Behinderung der Halteabschnitte 36 bei der Ausführung der Arbeitsbewegung 37 ausschließt.

Jeder Halteabschnitt 36 hat einen frei endenden, in Richtung zu der Längsachse 16 weisenden stirnseitigen Endbereich, der eine Klemmkante 42 bildet. Alle Klemmkanten 42 befinden sich gemeinsam im Bereich der axialen Innenfläche 27 der Anschlusseinheit 4. Die Klemmkanten 42 sind ausgebildet, um den Außenumfang 43 der eingesteckten Fluidleitung 5 klemmend radial zu beaufschlagen und die Fluidleitung 5 dadurch im eingesteckten Zustand axial unbeweglich zu fixieren.

Die Klemmkanten 42 umrahmen gemeinsam eine Klemmöffnung 44, die insbesondere von der inneren Mündungsöffnung 26a gebildet ist und deren Durchmesser im nicht eingesteckten Zustand der Fluidleitung 5 kleiner ist als der Außendurchmesser der anzuschließenden Fluidleitung 5. Wird die Fluidleitung 5 in die Einstecköffnung 26 eingeschoben, beaufschlagt sie die Halteabschnitte 36 jeweils an einer der Einstecköffnung 26 zugewandten Innenfläche 45, so dass die Halteabschnitte 36 unter Überwindung einer rückstellenden Federkraft nach außen gedrückt werden und anschließend mit ihren Klemmkanten 42 unter Vorspannung an dem Außenumfang 43 anliegen.

Die Innenflächen 45 sind zweckmäßigerweise als Schrägflächen ausgeführt, die nicht nur nach radial innen in Richtung zu der Längsachse 16 weisen, sondern gleichzeitig auch axial nach außen in Richtung zu der äußeren Mündungsöffnung 26b. Auf diese Weise kann die Fluidleitung 5 beim Einstecken mit ihrer vorauseilenden Stirnfläche auf die besagten schrägen Innenflächen 45 einwirken.

Damit die Anschlussverbindung der Fluidleitung 5 leckagefrei abgedichtet ist, verfügt die Anschlusseinheit 4 über eine spezielle Dichtungsstruktur 46, die unmittelbar von einem Abschnitt des Hüllkörpers 35 gebildet ist. Mithin ist die Dichtungsstruktur 46 ein Bestandteil der Anschlusseinheit 4 und stoffschlüssig durch Spritzgießen an das Halteelement 34 angeformt.

Die einstückige, ringförmige Dichtungsstruktur 46 weist einen ringförmigen Außendichtungsabschnitt 46a auf, der in der Gebrauchsstellung der Anschlusseinheit 4 an der Innenumfangsfläche 3a der Befestigungsöffnung 3 rings um die Längsachse 16 herum unter Abdichtung anliegt. Außerdem enthält die Dichtungsstruktur 46 einen ringförmigen Innendichtungsabschnitt 46b, der wie der Außendichtungsabschnitt 46a konzentrisch zu der Längsachse 16 angeordnet ist und der am Außenumfang 43 der eingesteckten Fluidleitung 5 ringsum unter Abdichtung anliegt. Ein den Außendichtungsabschnitt 46a mit dem Innendichtungsabschnitt 46b verbindender Verbindungsabschnitt 46c der Dichtungsstruktur 46 ist durchweg geschlossen, so dass zwischen dem Außendichtungsabschnitt 46a und dem Innendichtungsabschnitt 46b kein Fluiddurchtritt möglich ist. Die Dichtungsstruktur 46 ist dabei insbesondere so gestaltet, dass sie zumindest mit dem Innendichtungsabschnitt 46b und dem Verbindungsabschnitt 46c die zwischen benachbarten Halteabschnitten 36 vorhandenen Zwischenräume 38 abdichtend überbrückt. Zur besseren Unterscheidung seien diese Abschnitte der Dichtungsstruktur 46 als Überbrückungsabschnitte 46d bezeichnet.

Vorzugsweise befindet sich der ringförmige Innendichtungsabschnitt 46b im Bereich der Innenflächen 45 der Halteabschnitte 36. Dadurch sind die Klemmkanten 42 dem Innendichtungsabschnitt 46b in der Tiefenrichtung der Befestigungsöffnung 3 vorgelagert. Die Fluidleitung 5 tritt bei ihrem Einstecken in die Einstecköffnung 26 zuerst durch den ringförmigen Innendichtungsabschnitt 46b hindurch und erst dann durch die Klemmöffnung 44. Der mit dem Innendichtungsabschnitt 46b in Kontakt stehende Bereich der Fluidleitung 5 bleibt dadurch stets riefenfrei, was eine zuverlässige Abdichtung begünstigt.

Die Gummielastizität der Dichtungsstruktur 46 sorgt dafür, dass die Halteabschnitte 36 in der Ausführung ihrer Arbeitsbewegung 37 nicht beeinträchtigt werden. Insbesondere sind die Überbrückungsabschnitte 46d in der Lage, sich im Rahmen der Arbeitsbewegung 37 elastisch zu dehnen und auch wieder zusammenzuziehen, ohne ihre abdichtende Wirkung zu verlieren. Erfindungsgemäss ist es, wenn der Innendichtungsabschnitt 46b als nach radial innen vorstehende ringförmige Dichtlippe 47 ausgebildet ist oder eine solche Dichtlippe 47 aufweist. Beim Ausführungsbeispiel ist dies der Fall. Eine solche Dichtlippe 47 ist besonders flexibel und kann sich unabhängig von Durchmessertoleranzen der Fluidleitung 5 optimal an deren Außenumfang 43 anschmiegen. Die Dichtlippe 47 ist insbesondere innen an den Halteabschnitten 36 angeordnet. Der Außendichtungsabschnitt 46a befindet sich zweckmäßigerweise im Bereich des Außenumfanges des Halteelementes 34, wobei er zweckmäßigerweise bezüglich des Innendichtungsabschnitts 46b in der Achsrichtung der Längsachse 16 beabstandet ist. Der Außendichtungsabschnitt 46a liegt also näher bei der äußeren Mündungsöffnung 26b als der Innendichtungsabschnitt 46b. Vorzugsweise befindet sich der Außendichtungsabschnitt 46a in einem Bereich, der sich axial, insbesondere unmittelbar, an die Halteabschnitte 36 anschließt. Erfindungsgemäss ist der Außendichtungsabschnitt 46a als entgegengesetzt zur Einsteckrichtung der Fluidleitung 5 und mithin in Richtung zu der äußeren Mündungsöffnung 26b ragender Dichtvorsprung 48 ausgebildet, der ringförmig gestaltet und koaxial zu der Längsachse 16 ausgerichtet ist. Diesem Dichtvorsprung 48, der axial elastisch zusammendrückbar ist, liegt eine an dem Trägerbauteils ausgebildete ringförmige Dichtfläche 52 axial gegenüber, die ein Bestandteil der Innenumfangsfläche 3a der Befestigungsöffnung 3 ist und die axial ins Innere der Befestigungsöffnung 3 orientiert ist. Der Dichtvorsprung 48 ist mithin der Dichtfläche 52 zugewandt.

Wenn die angeschlossene Fluidleitung 5 mit einem Innendruck beaufschlagt ist, wirkt der Fluiddruck auch auf die von der Längsachse 16 wegweisende Außenfläche 53 der Dichtungsstruktur 46. Dies führt zum einen dazu, dass die Halteabschnitte 36 unter Ausführung einer geringfügigen Arbeitsbewegung 37 radial nach innen verschwenkt und verstärkt an den Außenumfang 43 der Fluidleitung 5 angedrückt werden. Gleichzeitig übt der Fluiddruck aber auch eine axial nach außen orientierte Schubkraft auf die Dichtungsstruktur 46 und somit auf die gesamte Anschlusseinheit 4 aus, so dass die Dichtungsstruktur 46 mit ihrem Dichtungsvorsprung 48 verstärkt an die gegenüberliegende Dichtfläche 52 des Trägerbauteils 2 angedrückt wird. Dadurch wird die Flächenpressung verstärkt und auch bei hohem Fluiddruck eine zuverlässige Abdichtung zwischen der Dichtungsstruktur 46 und dem Trägerbauteil 2 gewährleistet.

Vorteilhaft ist es, wenn der Außendichtungsabschnitt 46a gleichzeitig ein Bestandteil des Befestigungsmittels 22 und die Dichtfläche 52 ein Bestandteil des Gegenbefestigungsmittels 23 ist. Für das Ausführungsbeispiel trifft dies zu. Hier ist der Außendichtungsabschnitt 46a und insbesondere der ringförmige Dichtvorsprung 48 ein Bestandteil der inneren Nutflanke 24 der Befestigungsnut 22a, während die Dichtfläche 52 von der gegenüberliegenden, axial nach innen weisenden Stirnfläche des ringförmigen Befestigungsvorsprunges 23a gebildet ist. Die Funktionen der axialen Fixierung und der Außenabdichtung werden somit von ein und denselben Komponenten der Anschlussvorrichtung 1 übernommen.

Beim Ausführungsbeispiel der Figuren 1 bis 6 ist das Halteelement 34 mit Ausnahme der Klemmkanten 42 der Halteabschnitte 36 von dem Hüllkörper 35 ringsum vollständig umschlossen. Mit anderen Worten ist das Halteelement 34 mit Ausnahme der Klemmkanten 42 komplett in das gummielastische Material des Hüllkörpers 35 eingebettet. Dies begünstigt unter anderem die Reinigung und schützt das Halteelement 34, das zweckmäßigerweise aus Metall besteht, vor Korrosion. Dadurch, dass die Klemmkanten 42 mit dem Material des Hüllkörpers 35 nicht beschichtet sind, können sie optimal mit dem Außenumfang 43 der Fluidleitung 5 festhaltend kooperieren.

Bei einem nicht gezeigten Ausführungsbeispiel ist das Halteelement 34 einschließlich der Klemmkanten 42 von dem Hüllkörper 35 komplett umhüllt. Allerdings ist es in diesem Fall zweckmäßig, wenn die Materialbeschichtung im Bereich der Klemmkanten 42 relativ dünn ist, so dass sich trotz der Umhüllung ein zuverlässiger Haltegriff der Halteabschnitte 36 bezüglich der Fluidleitung 5 ausbilden kann.

Die Ausgestaltung kann auch so sein, dass unmittelbar nach der Fertigung der Anschlusseinheit 4 die Klemmkanten 42 mit einem dünnen Materialfilm des Materials des Hüllkörpers 35 beschichtet sind, der dann beim erstmaligen Hindurchschieben einer Fluidleitung 5 abgeschabt wird.

Die Dichtungsstruktur 46 ist ein einstückiger Bestandteil des Hüllkörpers 35.

Zweckmäßigerweise ist der Hüllkörper 35 so ausgebildet, dass er unmittelbar das Befestigungsmittel 22 ausbildet. Exemplarisch ist der Hüllkörper 35 so konturiert, dass er an seinem Außenumfang eine Ringnut aufweist, die die Befestigungsnut 22a bildet. Sowohl der Nutgrund als auch die beiden Nutflanken 24, 25 der Befestigungsnut 22a sind folglich vom Material des Hüllkörpers 35 definiert.

Das Halteelement 34 ist zweckmäßigerweise derart strukturiert, dass es abgesehen von einer die Arbeitsbewegung 37 der Halteabschnitte 36 ermöglichenden Federelastizität auch noch zumindest in dem axialen Bereich, in dem sich das Befestigungsmittel 22 befindet, radial federelastisch nachgiebig ist. Dadurch ist es möglich, dass die Anschlusseinheit 4 im Bereich des Befestigungsmittels 22 diametral zusammendrückbar ist, so dass sich ihr Außendurchmesser im Bereich des Befestigungsmittels 22 verringert. Dadurch ist gewährleistet, dass die Anschlusseinheit 4 beim Einstecken in die Befestigungsöffnung 3 vorübergehend ringsum radial zusammendrückbar ist, wenn der dem Befestigungsmittel 22 zu der Klemmöffnung 44 hin vorgelagerte Abschnitt der Anschlusseinheit 4 das Gegenbefestigungsmittel 23 passiert. Dies ermöglicht eine einfache Befestigung der Anschlusseinheit 4 in der Befestigungsöffnung 3 durch Einschnappen, Einrasten oder Einclipsen. Diese Montage kann bei Bedarf zweckmäßigerweise von Hand durchgeführt werden, was den Einsatz aufwendiger Montagewerkzeuge erübrigt. Gleichwohl erleichtert natürlich die einfache Montage die automatisierte Bestückung von Trägerbauteilen 2 mit Anschlusseinheiten 4.

Das Halteelement 34 enthält beim Ausführungsbeispiel einen ringförmigen Kopfabschnitt 54, von dem mehrere mit gegenseitigem Abstand zueinander um die Einstecköffnung 26 herum verteilte federelastische Haltearme 55 in die gleiche axiale Richtung wegragen. Mehrere und insbesondere sämtliche dieser Haltearme 55 bilden jeweils einen der Halteabschnitte 36. Zweckmäßigerweise sind die Halteabschnitte 36 von den dem Kopfabschnitt 54 axial entgegengesetzten Endabschnitten der Haltearme 55 gebildet. Die Haltearme 55 enden dort jeweils mit einer der schon erwähnten Klemmkanten 42.

Der Kopfabschnitt 54 hat insbesondere die Form einer Ringscheibe mit zu der Längsachse 16 radialer Scheibenebene, wobei die Haltearme 55 am radial außen liegenden Randbereich des Kopfabschnittes 54 angeformt sind.

Die Haltearme 55 sind unabhängig voneinander radial bezüglich der Längsachse 16 federelastisch verformbar. Dabei verformen sich die Haltearme 55 insbesondere relativ zu dem im Wesentlichen starren Kopfabschnitt 54.

Zweckmäßigerweise hat das Halteelement 34 im Bereich des Kopfabschnittes 54 den größten Außendurchmesser. Die Haltearme 55 schließen sich an den Kopfabschnitt 54 an dessen Außenumfang an und verfügen im Anschluss an den Kopfabschnitt 54 zweckmäßigerweise über einen sich jeweils axial und zugleich radial nach innen erstreckenden Schrägabschnitt 56. An jeden Schrägabschnitt 56 schließt sich ein bevorzugt zumindest im Wesentlichen parallel zu der Längsachse 16 ausgerichteter Zwischenabschnitt 57 an, der in einen sich radial nach außen hin erstreckenden Schulterabschnitt 58 übergeht, an den sich schließlich ein krallenförmig gestalteter Halteabschnitt 36 anschließt, der wiederum schräg axial nach innen und zugleich nach radial innen orientiert ist.

Alle Haltearme 55 sind untereinander bevorzugt identisch ausgebildet, so dass sich ihre Schrägabschnitte 56, Zwischenabschnitte 57 und Schulterabschnitte 58 sowie Halteabschnitte 36 untereinander jeweils auf gleicher axialer Höhe befinden.

Das von dem Hüllkörper 35 definierte Befestigungsmittel 22 befindet sich in einem Bereich, der axial zwischen den Halteabschnitten 36 und dem Kopfabschnitt 54 liegt. Beim Ausführungsbeispiel liegt das Befestigungsmittel 22 auf gleicher axialer Höhe mit den Zwischenabschnitten 57.

Dadurch, dass die Haltearme 55 radial elastisch ausgebildet sind, können sie zur Verringerung des Durchmessers des Befestigungsmittels 22 nachgeben, wenn die Anschlusseinheit 4 unter Herstellung einer Rastverbindung oder Schnappverbindung axial in die Befestigungsöffnung 3 hineingedrückt wird.

Das Halteelement 34 ist zweckmäßigerweise als Stanzbiegeteil ausgebildet, das bei der Herstellung aus einem Grundmaterial ausgestanzt und dann in die gewünschte Form gebogen wird. Dies ermöglicht insbesondere auch eine in sich geschlossene Ringform des Kopfabschnittes 54 ohne sich eventuell auf die Stabilität auswirkende Trennstelle.

Bei einem nicht illustrierten Ausführungsbeispiel weist das ringförmig strukturierte Halteelement 34 an mindestens einer Stelle seines Umfanges eine Trennstelle auf.

Der Kopfabschnitt 54 ist zweckmäßigerweise ein Bestandteil des Außenabschnittes 18 der Anschlusseinheit 4, so dass er in der Gebrauchsstellung der Anschlusseinheit 4 außerhalb der Befestigungsöffnung 3 zu liegen kommt, bevorzugt jedoch von dem Hüllkörper 35 umhüllt ist.

Der Außenabschnitt 18 hat zweckmäßigerweise einen größeren Außendurchmesser als die Mündung 14 der Befestigungsöffnung 3. Dadurch kann der Außenabschnitt 18 mit einer axial orientierten Schulterfläche 62 an der die Mündung 14 umrahmenden Vorderfläche 7 des Trägerbauteils 2 anliegen. Die Schulterfläche 62 ist bevorzugt ein Bestandteil des Hüllkörpers 35, der aufgrund seiner Gummielastizität zweckmäßigerweise mit einer gewissen axialen Vorspannung an der Vorderfläche 7 anliegt, so dass dort ein Eindringen von Verunreinigungen verhindert wird. Dies sorgt für eine gute Reinigungsfreundlichkeit der Anschlussvorrichtung 1.

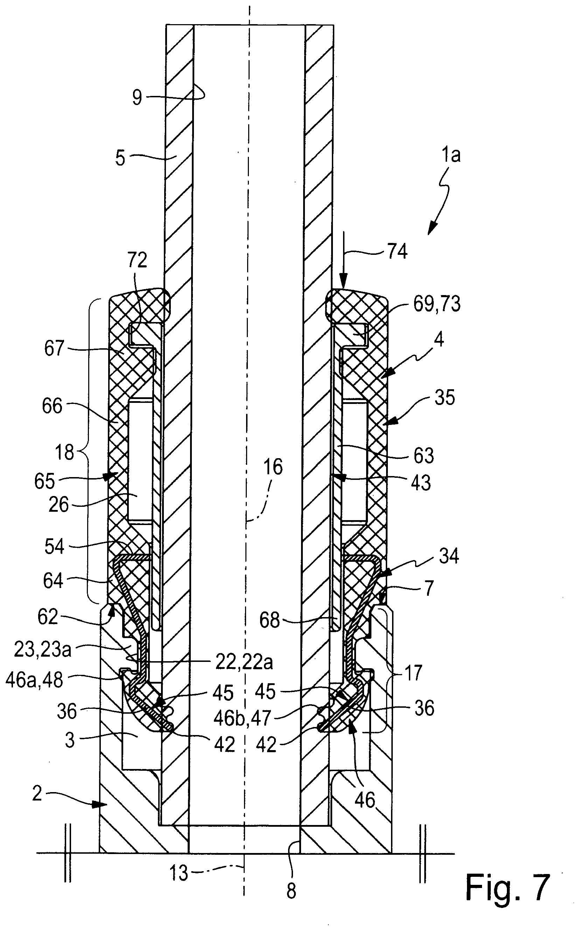

Das in Figur 7 illustrierte Ausführungsbeispiel einer weiteren Anschlussvorrichtung 1a ist abgesehen von einer modifizierten Gestaltung des Außenabschnittes 18 der Anschlusseinheit 4 und des zusätzlichen Vorhandenseins einer Lösehülse 63 identisch wie die bisher beschriebene Anschlussvorrichtung 1 ausgebildet, so dass die zur Anschlussvorrichtung 1 der Figuren 1 bis 6 getroffenen Ausführungen in gleichem Maße auf die Anschlussvorrichtung 1a der Figur 7 zutreffen. Der besseren Übersichtlichkeit wegen enthält die Figur 7 nur einige der in Figuren 1 bis 6 eingetragenen Bezugszeichen.

Während beim Ausführungsbeispiel der Figuren 1 bis 6 der Außenabschnitt 18 relativ kurz ausfällt, hat er beim Ausführungsbeispiel der Figur 7 eine größere Baulänge, die sich allerdings nur auf den Hüllkörper 35 bezieht und nicht auch auf das Halteelement 34. So schließt sich an einen den Kopfabschnitt 54 aufnehmenden und axial außerhalb der Befestigungsöffnung 3 liegenden ersten Längenabschnitt 64 des Hüllkörpers 35 in koaxialer Verlängerung ein zweiter Längenabschnitt in Form eines hülsenförmiger Halteabschnitt 65 des Hüllkörpers 35 an, so dass der Außenabschnitt 18 verglichen mit der Bauform gemäß Figuren 1 bis 6 insgesamt verlängert ist und die äußere Mündungsöffnung 26b der Einstecköffnung 26 in einem größeren Abstand zu dem Trägerbauteil 2 angeordnet ist als bei der Ausführungsform der Figuren 1 bis 6.

Der hülsenförmige Halteabschnitt 65 hat einen sich an den ersten Längenabschnitt 64 anschließenden Verformungsbereich 66 mit reduzierter Wandstärke, an den sich ein steiferer Befestigungsbereich 67 anschließt.

In die Anschlusseinheit 4 ist koaxial ein die schon angesprochene Lösehülse 63 bildender Hülsenkörper koaxial eingesetzt, der von der Anschlusseinheit 4 außen zweckmäßigerweise ringsum umgeben ist. Die Lösehülse 63 hat einen Innendurchmesser, der etwas größer ist als der Außendurchmesser der anzuschließenden Fluidleitung 5, so dass die Fluidleitung 5 beim Einschieben in die Einstecköffnung 26 durch die Lösehülse 63 hindurchgeschoben wird.

Die Lösehülse 63 erstreckt sich in dem Außenabschnitt 18 und in den Innenabschnitt 17 der Anschlusseinheit 4 hinein, wobei sie mit ihrem dem Grund der Befestigungsöffnung 3 zugewandten inneren Endabschnitt 68 bevorzugt mit axialem Abstand vor den vom Halteelement 34 umhüllten Halteabschnitten 36 endet.

An ihrem dem inneren Endabschnitt 68 axial entgegengesetzten äußeren Endabschnitt 69 ist die Lösehülse 63 an dem Befestigungsbereich 67 axial unbeweglich fixiert. Exemplarisch geschieht dies mittels einer Schnappverbindung. Der Befestigungsbereich 67 weist am Innenumfang eine ringförmige Aufnahmenut 72 auf, in die die Lösehülse 63 mit einem am äußeren Endabschnitt 69 ausgebildeten Ringbund 73 eingeschnappt ist.

Der Hüllkörper 35 ist in seinem Verformungsbereich 66 axial elastisch verformbar. Durch Aufbringen einer in der Einsteckrichtung der Fluidleitung 5 orientierten axialen Drückkraft 74 auf den Befestigungsbereich 67 kann sich der Befestigungsbereich 67 axial an das Halteelement 34 annähern, wobei der hülsenförmige Halteabschnitt 65 in seinem Verformungsbereich 66 axial gestaucht wird. Nach dem Wegnehmen der Drückkraft 74 kehrt der Befestigungsbereich 67 wieder in die Ausgangsstellung zurück.

Da die Lösehülse 63 nur lokal, nämlich an dem Befestigungsbereich 67, mit dem Hüllkörper 35 axial unbeweglich gekoppelt ist, macht sie die eben geschilderte Axialbewegung des Befestigungsbereiches 67 mit. Somit besteht die Möglichkeit, durch Auferlegung der Drückkraft 74 auf den Hüllkörper 35 die Lösehülse 63 in Richtung zu den ihr vorgelagerten Halteabschnitten 36 zu verlagern. Diese Verlagerung ist eine Lösebewegung, im Rahmen derer die Lösehülse 63 mit ihrem inneren Endabschnitt 68 im Bereich der Halteabschnitte 36 auf die Anschlusseinheit 4 einwirkt und dadurch die Halteabschnitte 36 vom Außenumfang 43 der Fluidleitung 5 abhebt. In diesem Zustand besteht die Möglichkeit, die zuvor eingesteckte Fluidleitung 5 beschädigungsfrei wieder herauszuziehen.

Bei der Anschlussvorrichtung 1a ist das Halteelement 34 am Innenumfang seines bevorzugt ringscheibenförmig ausgebildeten Kopfabschnittes 74 von dem Hüllkörper 35 nicht umhüllt, um mehr Platz für die eingesteckte Lösehülse 63 zu erhalten. Das Halteelement 34 ist somit zwar nicht vollständig, gleichwohl jedoch zumindest annähernd vollständig von dem Hüllkörper 35 umhüllt. Bei einem abgewandelten Ausführungsbeispiel der Anschlussvorrichtung 1a ist der Kopfabschnitt 74 auch an seinem Innenumfang von dem Hüllkörper bedeckt bzw. umhüllt.

Wenn bei der Anschlussvorrichtung 1a die Fluidleitung 5 angeschlossen ist, ist die Lösehülse 63 durch den sie umgebenden Hüllkörper 35 zur Umgebung hin abgeschirmt.

Der Hüllkörper 35 liegt bei beiden Ausführungsformen 1, 1a der Anschlussvorrichtung im Bereich der äußeren Mündungsöffnung 26b zweckmäßigerweise mit zumindest geringer radialer Vorspannung abdichtend am Außenumfang 43 der Fluidleitung 5 an. Dadurch können von außen her keine Verunreinigungen ins Innere der mit einer Fluidleitung 5 bestückten Anschlusseinheit 5 eindringen.

## Patentansprüche

1. Anschlussvorrichtung für mindestens eine Fluidleitung, mit mindestens einer manschettenförmig strukturierten Anschlusseinheit (4), die ausgebildet ist, um in einer Gebrauchsstellung in eine Befestigungsöffnung (3) eines gesonderten Trägerbauteils (2) einzugreifen und in dieser Befestigungsöffnung (3) befestigt zu sein, und die eine Einstecköffnung (26) definiert, in die eine anzuschließende Fluidleitung (5) einsteckbar ist, wobei der Anschlusseinheit (4) koaxial eine als Bestandteil der Anschlusseinheit (4) ausgebildete einstückige ringförmige Dichtungsstruktur (46) zugeordnet ist, die einen zum abdichtenden Anliegen an der Innenumfangsfläche (3a) der Befestigungsöffnung (3) vorgesehenen ringförmigen Außendichtungsabschnitt (46a) und einen die eingesteckte Fluidleitung (5) an ihrem Außenumfang (43) abdichtbar umschließenden ringförmigen Innendichtungsabschnitt (46b) aufweist, und wobei die Anschlusseinheit (4) ein ringförmig strukturiertes Halteelement (34) aufweist, das über mehrere um die Einstecköffnung (26) herum verteilte und radial bewegliche Halteabschnitte (36) verfügt, die jeweils ausgebildet sind, um den Außenumfang (43) der eingesteckten Fluidleitung (5) zum Zwecke ihres Festhaltens zu beaufschlagen, wobei die Dichtungsstruktur (46) zumindest partiell und einschließlich des ringförmigen Innendichtungsabschnittes (46b) an die radial beweglichen Halteabschnitte (36) angeformt ist und zwischen benachbarten Halteabschnitten (36) vorhandene Zwischenräume (38) abdichtend überbrückt, **dadurch gekennzeichnet, dass** die Dichtungsstruktur (46) von einem unmittelbar bei seiner Herstellung durch Spritzgießen unter Abdichtung stoffschlüssig an das Halteelement (34) angeformten gummielastischen Spritzgusskörper gebildet ist, wobei der Innendichtungsabschnitt (46b) mindestens eine innen an den Halteabschnitten (36) angeordnete, radial nach innen vorstehende ringförmige Dichtlippe (47) aufweist, die am Außenumfang (43) der eingesteckten Fluidleitung (5) abdichtend anliegt.

2. Anschlussvorrichtung nach Anspruch 1, **dadurch gekennzeichnet, dass** der Innendichtungsabschnitt (46b) an die der Einstecköffnung (26) zugewandten Innenflächen (45) der Halteabschnitte (36) angeformt ist.

3. Anschlussvorrichtung nach Anspruch 1 oder 2, **dadurch gekennzeichnet, dass** der Außendichtungsabschnitt (46a) an den Außenumfang des Halteelementes (34) angeformt ist, vorzugsweise in dem sich axial an die Halteabschnitte (36) anschließenden Bereich.

4. Anschlussvorrichtung nach Anspruch 3, **dadurch gekennzeichnet, dass** der Außendichtungsabschnitt (46a) einen entgegengesetzt zur Einsteckrichtung der Fluidleitung (5) in der axialen Richtung der Anschlusseinheit (4) orientierten ringförmigen Dichtvorsprung (48) aufweist, der in der Gebrauchsstellung an dem Trägerbauteil (2) axial abdichtend anlegbar ist.

5. Anschlussvorrichtung nach Anspruch 4, **dadurch gekennzeichnet, dass** die Anschlusseinheit (4) an ihrem Außenumfang eine der Befestigung an dem Trägerbauteil (2) dienende, radial offene ringförmige Befestigungsnut (22a) aufweist, deren eine Nutflanke (24) den Dichtvorsprung (48) aufweist.

6. Anschlussvorrichtung für mindestens eine Fluidleitung, mit mindestens einer manschettenförmig strukturierten Anschlusseinheit (4), die ausgebildet ist, um in einer Gebrauchsstellung in eine Befestigungsöffnung (3) eines gesonderten Trägerbauteils (2) einzugreifen und in dieser Befestigungsöffnung (3) befestigt zu sein, und die eine Einstecköffnung (26) definiert, in die eine anzuschließende Fluidleitung (5) einsteckbar ist, wobei der Anschlusseinheit (4) koaxial eine als Bestandteil der Anschlusseinheit (4) ausgebildete einstückige ringförmige Dichtungsstruktur (46) zugeordnet ist, die einen zum abdichtenden Anliegen an der Innenumfangsfläche (3a) der Befestigungsöffnung (3) vorgesehenen, an den Außenumfang des Halteelementes (34) angeformten ringförmigen Außendichtungsabschnitt (46a) und einen die eingesteckte Fluidleitung (5) an ihrem Außenumfang (43) abdichtbar umschließenden ringförmigen Innendichtungsabschnitt (46b) aufweist, und wobei die Anschlusseinheit (4) ein ringförmig strukturiertes Halteelement (34) aufweist, das über mehrere um die Einstecköffnung (26) herum verteilte und radial bewegliche Halteabschnitte (36) verfügt, die jeweils ausgebildet sind, um den Außenumfang (43) der eingesteckten Fluidleitung (5) zum Zwecke ihres Festhaltens zu beaufschlagen, wobei die Dichtungsstruktur (46) zumindest partiell und einschließlich des ringförmigen Innendichtungsabschnittes (46b) an die radial beweglichen Halteabschnitte (36) angeformt ist und zwischen benachbarten Halteabschnitten (36) vorhandene Zwischenräume (38) abdichtend überbrückt, **dadurch gekennzeichnet, dass** die Dichtungsstruktur (46) von einem unmittelbar bei seiner Herstellung durch Spritzgießen unter Abdichtung stoffschlüssig an das Halteelement (34) angeformten gummielastischen Spritzgusskörper gebildet ist, wobei der Außendichtungsabschnitt (46a) einen entgegengesetzt zur Einsteckrichtung der Fluidleitung (5) in der axialen Richtung der Anschlusseinheit (4) orientierten ringförmigen Dichtvorsprung (48) aufweist, der in der Gebrauchsstellung an dem Trägerbau**teil (2)** axial abdichtend anlegbar ist.

7. Anschlussvorrichtung nach Anspruch 6, **dadurch gekennzeichnet, dass** der Außendichtungsabschnitt (46a) in dem sich axial an die Halteabschnitte (36) anschließenden Bereich an den Außenumfang des Halteelements (34) angeformt ist.

8. Anschlussvorrichtung nach Anspruch 6 oder 7, **dadurch gekennzeichnet, dass** die Anschlusseinheit (4) an ihrem Außenumfang eine der Befestigung an dem Trägerbauteil (2) dienende, radial offene ringförmige Befestigungsnut (22a) aufweist, deren eine Nutflanke (24) den Dichtvorsprung (48) aufweist

9. Anschlussvorrichtung nach einem der Ansprüche 6 bis 8, **dadurch gekennzeichnet, dass** der Innendichtungsabschnitt (46b) an die der Einstecköffnung (26) zugewandten Innenflächen (45) der Halteabschnitte (36) angeformt ist.

10. Anschlussvorrichtung nach einem der Ansprüche 6 bis 9, **dadurch gekennzeichnet, dass** der Innendichtungsabschnitt (46b) mindestens eine an den Halteabschnitten (36) angeordnete, radial nach innen vorstehende ringförmige Dichtlippe (47) aufweist, die am Außenumfang (43) der eingesteckten Fluidleitung (5) abdichtend anliegt.

11. Anschlussvorrichtung nach einem der Ansprüche 1 bis 10, **dadurch gekennzeichnet, dass** die Halteabschnitte (36) des Halteelementes (34), einschließlich oder abgesehen von an ihnen ausgebildeten und an der eingesteckten Fluidleitung (5) anlegbaren Klemmkanten (42), ringsum vollständig von der Dichtungsstruktur (46) umhüllt sind.

12. Anschlussvorrichtung nach einem der Ansprüche 1 bis 11, **dadurch gekennzeichnet, dass** die Dichtungsstruktur (46) einstückiger Bestandteil eines einstückigen gummielastischen Hüllkörpers (35) ist, der unmittelbar bei seiner Herstellung durch Spritzgießen unter Abdichtung stoffschlüssig an das Halteelement (34) angeformt ist und der das Halteelement (34) zumindest partiell umhüllt.

13. Anschlussvorrichtung nach Anspruch 12, **dadurch gekennzeichnet, dass** das Halteelement (34)., einschließlich oder abgesehen von an der eingesteckten Fluidleitung (5) anlegbaren Klemmkanten (42) seiner Halteabschnitte (36), ringsum zumindest annähernd vollständig von dem Hüllkörper (35) umhüllt ist.

14. Anschlussvorrichtung nach Anspruch 12 oder 13, **dadurch gekennzeichnet, dass** der Hüllkörper (35) ein koaxial am Außenumfang der Anschlusseinheit (4) angeordnetes, der Befestigung an dem Trägerbauteil (2) dienendes Befestigungsmittel (22) ausbildet, das insbesondere als radial offene ringförmige Befestigungsnut (22a) ausgebildet ist.

15. Anschlussvorrichtung nach einem der Ansprüche 1 bis 14, **dadurch gekennzeichnet, dass** das Halteelement (34) einen ringförmigen Kopfabschnitt (54) aufweist, von dem mehrere mit gegenseitigem Abstand um die Einstecköffnung (26) herum verteilte Haltearme (55) axial in die gleiche Richtung wegragen, die jeweils einen der Halteabschnitte (36) bilden und die bezüglich des Kopfabschnittes (54) radial federelastisch verformbar sind.

16. Anschlussvorrichtung nach Anspruch 15 in Verbindung mit Anspruch 14, **dadurch gekennzeichnet, dass** das Halteelement (34) von dem Befestigungsmittel (22) in einem axial zwischen den Halteabschnitten (36) und dem Kopfabschnitt (54) liegenden Bereich der Haltearme (55) koaxial umschlossen ist.

17. Anschlussvorrichtung nach einem der Ansprüche 1 bis 16, **dadurch gekennzeichnet, dass** in der Anschlusseinheit (4) eine zum lösenden Betätigen der Halteabschnitte (36) dienende Lösehülse (63) axial verschiebbar gelagert ist, die zweckmäßigerweise an ihrem Außenumfang von einem das Halteelement (34) axial überragenden und gleichzeitig die Dichtungsstruktur (46) bildenden gummielastischen Hüllkörper (35) umschlossen ist, wobei sie insbesondere lokal mittels einer Schnappverbindung an einem bezüglich des Halteelementes (34) axial beweglichen Bestandteil des Hüllkörpers (35) fixiert ist.

18. Anschlussvorrichtung nach einem der Ansprüche 1 bis 17, **dadurch gekennzeichnet, dass** das Halteelement (34) einstückig aus federelastischem Metall hergestellt ist, insbesondere aus Edelstahl, wobei es insbesondere als Stanzbiegeteil gefertigt ist.

19. Anschlussvorrichtung nach einem der Ansprüche 1 bis 18, **dadurch gekennzeichnet, dass** die Befestigungsöffnung (3) dazu ausgelegt ist, um mit einem in dem Trägerbauteil ausgebildeten Fluidkanal (8) zu kommunizieren.

## Claims

1. Connecting device for at least one fluid conduit, comprising at least one connecting unit (4) having a sleeve-shaped structure, which is designed to engage in a position of use with a mounting opening (3) of a separate support part (2) and to be secured in said mounting opening (3) and which defines an insertion opening (26), into which a fluid conduit (5) to be connected can be inserted, wherein a one-piece annular seal structure (46), which is designed as a part of the connecting unit (4) and comprises an annular outer seal section (46a) provided for bearing in a sealing manner against the inner circumferential surface (3) of the mounting opening (3) and an annular inner seal section (46b) enclosing the inserted fluid conduit (5) at its outer circumference (43) while being capable of forming a seal, is coaxially assigned to the connecting unit (4), and wherein the connecting unit (4) comprises a holding element (34) having an annular structure, which has a plurality of holding sections (36), which are distributed around the insertion opening (26) and movable radially and each of which is designed to apply pressure to the outer circumference (43) of the inserted fluid conduit (5) for the purpose of holding it, wherein the seal structure (46) is, at least partially and including the annular inner seal section (46b), moulded onto the radially movable holding sections (36) and bridges gaps (38) present between adjacent holding sections (36) in a sealing manner, **characterised in that** the seal structure (46) is represented by a rubber-elastic injection-moulded body adhesively moulded onto the holding element (34) directly during its production by injection moulding, wherein the inner seal section (46b) has at least one annular sealing lip (47), which is located at the inside of the holding sections (36), projects radially inwards and bears against the outer circumference (43) of the inserted fluid conduit (5) in a sealing manner.

2. Connecting device according to claim 1, **characterised in that** the inner seal section (46b) is moulded onto the inner surfaces (45) of the holding sections (36), which face the insertion opening (26).

3. Connecting device according to claim 1 or 2, **characterised in that** the outer seal section (46a) is moulded onto the outer circumference of the holding element (34), preferably in the region which axially adjoins the holding sections (36).

4. Connecting device according to claim 3, **characterised in that** the outer seal section (46a) has an annular sealing projection (48), which is oriented in the axial direction of the connecting unit (4) against the insertion direction of the fluid conduit (5) and can be placed against the support part (2) in an axially sealing manner in the position of use.

5. Connecting device according to claim 4, **characterised in that** the connecting unit (4) has at its outer circumference a radially open annular mounting groove (22a), which is used for mounting on the support part (2) and one groove side (24) of which has the sealing projection (48).

6. Connecting device for at least one fluid conduit, comprising at least one connecting unit (4) having a sleeve-shaped structure, which is designed to engage in a position of use with a mounting opening (3) of a separate support part (2) and to be secured in said mounting opening (3) and which defines an insertion opening (26), into which a fluid conduit (5) to be connected can be inserted, wherein a one-piece annular seal structure (46), which is designed as a part of the connecting unit (4) and comprises an annular outer seal section (46a) provided for bearing in a sealing manner against the inner circumferential surface (3) of the mounting opening (3) and an annular inner seal section (46b) enclosing the inserted fluid conduit (5) at its outer circumference (43) while being capable of forming a seal, is coaxially assigned to the connecting unit (4), and wherein the connecting unit (4) comprises a holding element (34) having an annular structure, which has a plurality of holding sections (36), which are distributed around the insertion opening (26) and movable radially and each of which is designed to apply pressure to the outer circumference (43) of the inserted fluid conduit (5) for the purpose of holding it, wherein the seal structure (46) is, at least partially and including the annular inner seal section (46b), moulded onto the radially movable holding sections (36) and bridges gaps (38) present between adjacent holding sections (36) in a sealing manner, **characterised in that** the seal structure (46) is represented by a rubber-elastic injection-moulded body adhesively moulded onto the holding element (34) directly during its production by injection moulding, wherein the outer seal section (46a) has an annular sealing projection (48), which is oriented in the axial direction of the connecting unit (4) against the insertion direction of the fluid conduit (5) and can be placed against the support part (2) in an axially sealing manner in the position of use.

7. Connecting device according to claim 6, **characterised in that** the outer seal section (46a) is moulded onto the outer circumference of the holding element (34) in the region which axially adjoins the holding element (34).

8. Connecting device according to claim 6 or 7, **characterised in that** the connecting unit (4) has at its outer circumference a radially open annular mounting groove (22a), which is used for mounting on the support part (2) and one groove side (24) of which has the sealing projection (48).

9. Connecting device according to any of claims 6 to 8, **characterised in that** the inner seal section (46b) is moulded onto the inner surfaces (45) of the holding sections (36) which face the insertion opening (26).

10. Connecting device according to any of claims 6 to 9, **characterised in that** the inner seal section (46b) has at least one annular sealing lip (47), which is located at the holding sections (36), projects radially inwards and bears against the outer circumference (43) of the inserted fluid conduit (5) in a sealing manner.

11. Connecting device according to any of claims 1 to 10, **characterised in that** the holding sections (36) of the holding element (34), including or apart from clamping edges (42) formed thereon and placeable against the inserted fluid conduit (5), are completely encased by the seal structure (46) all around.

12. Connecting device according to any of claims 1 to 11, **characterised in that** the seal structure (46) is an integral part of a one-piece rubber-elastic enveloping body (35), which is adhesively moulded onto the holding element (34) directly during its production by injection moulding and which at least partially encases the holding element (34).

13. Connecting device according to claim 12, **characterised in that** the holding element (34), including or apart from clamping edges (42) of its holding sections (36) which are placeable against the inserted fluid conduit (5), is at least almost completely encased by the enveloping body (35) all around.

14. Connecting device according to claim 12 or 13, **characterised in that** the enveloping body (35) forms a fastening means (22), which is located coaxially at the outer circumference of the connecting unit (4) and used for fastening at the support part (2) and which is designed as a radially open annular mounting groove (22a) in particular.

15. Connecting device according to any of claims 1 to 14, **characterised in that** the holding element (34) has an annular head section (54), from which a plurality of holding arms (55) distributed with mutual spacing around the insertion opening (26) project in the same direction, each of which holding arms (55) forms one of the holding sections (36) and is spring-elastically deformable in the radial direction relative to the head section (54).

16. Connecting device according to claim 15 in conjunction with claim 14, **characterised in that** the holding element (34) is coaxially enclosed by the fastening means (22) in a region of the holding arms (55) which lies axially between the holding sections (36) and the head section (54).

17. Connecting device according to any of claims 1 to 16, **characterised in that** in the connecting unit (4) a release sleeve (63) for the releasing actuation of the holding sections (36) is mounted in an axially displaceable manner, which release sleeve (63) is expediently enclosed at its outer circumference by a rubber-elastic enveloping body (35), which axially projects beyond the holding element (34) while forming the seal structure (46), being in particular fixed locally by means of a snap connection at a part of the enveloping body (35) which is axially movable relative to the holding element (34).

18. Connecting device according to any of claims 1 to 17, **characterised in that** the holding element (34) is produced in one piece from a spring-elastic metal, in particular from stainless steel, being in particular produced as a stamped and bent part.

19. Connecting device according to any of claims 1 to 18, **characterised in that** the mounting opening (3) is designed for communication with a fluid conduit (8) formed in the support part.

## Revendications

1. Dispositif de raccordement pour au moins une conduite de fluide, avec au moins une unité de raccordement (4) structurée de manière à présenter une forme de manchette, qui est réalisée pour venir en prise, dans une position d'utilisation, avec une ouverture de fixation (3) d'un composant de support (2) séparé et être fixée dans ladite ouverture de fixation (3), et qui définit une ouverture d'enfichage (26), dans laquelle une conduite de fluide (5) à raccorder peut être enfichée, dans lequel une structure d'étanchéité (46) de forme annulaire d'un seul tenant réalisée en tant que partie intégrante de l'unité de raccordement (4) est associée de manière coaxiale à l'unité de raccordement (4), qui présente une section d'étanchéité extérieure (46a) de forme annulaire prévue pour reposer de manière étanche au niveau de la surface périphérique intérieure (3a) de l'ouverture de fixation (3) et une section d'étanchéité intérieure (46b) de forme annulaire entourant de manière étanche la conduite de fluide (5) enfichée au niveau de sa périphérie extérieure (43), et dans lequel l'unité de raccordement (4) présente un élément de maintien (34) structuré de manière à présenter une forme annulaire, qui dispose de plusieurs sections de maintien (36) réparties tout autour de l'ouverture d'enfichage (26) et mobiles de manière radiale, qui sont réalisées respectivement pour contraindre la périphérie extérieure (43) de la conduite de fluide (5) enfichée aux fins de son immobilisation, dans lequel la structure d'étanchéité (46) est formée au moins en partie et y compris la section d'étanchéité intérieure (46b) de forme annulaire au niveau des sections de maintien (36) mobiles de manière radiale et surmonte de manière étanche des espaces intermédiaires (38) présents entre des sections de maintien (36) adjacentes, **caractérisé en ce que** la structure d'étanchéité (46) est formée par un corps de moulage par injection élastique comme un caoutchouc formé par liaison de matière au niveau de l'élément de maintien (34) moyennant une étanchéification directement lors de sa fabrication par moulage par injection, dans lequel la section d'étanchéité intérieure (46b) présente au moins une lèvre étanche (47) de forme annulaire disposée côté intérieur au niveau des sections de maintien (36), faisant saillie radialement vers l'intérieur, qui repose de manière étanche au niveau de la périphérie extérieure (43) de la conduite de fluide (5) enfichée.

2. Dispositif de raccordement selon la revendication 1, **caractérisé en ce que** la section d'étanchéité intérieure (46b) est formée au niveau des surfaces intérieures (45), tournées vers l'ouverture d'enfichage (26), des sections de maintien (36).

3. Dispositif de raccordement selon la revendication 1 ou 2, **caractérisé en ce que** la section d'étanchéité extérieure (46a) est formée au niveau de la périphérie extérieure de l'élément de maintien (34), de préférence dans la zone se raccordant de manière axiale au niveau des sections de maintien (36).

4. Dispositif de raccordement selon la revendication 3, **caractérisé en ce que** la section d'étanchéité extérieure (46a) présente une partie faisant saillie étanche (48) de forme annulaire orientée dans le sens opposé à la direction d'enfichage de la conduite de fluide (5) dans la direction axiale de l'unité de raccordement (4), qui peut être placée de manière axialement étanche, dans la position d'utilisation, au niveau du composant de support (2).

5. Dispositif de raccordement selon la revendication 4, **caractérisé en ce que** l'unité de raccordement (4) présente, au niveau de sa périphérie extérieure, une rainure de fixation (22a) de forme annulaire servant à la fixation au niveau du composant de support (2), ouverte de manière radiale, dont un flanc de rainure (24) présente la partie faisant saillie étanche (48).

6. Dispositif de raccordement pour au moins une conduite de fluide, avec au moins une unité de raccordement (4) structurée de manière à présenter une forme de manchette, qui est réalisée pour venir en prise, dans une position d'utilisation, avec une ouverture de fixation (3) d'un composant de support (2) séparé et être fixée dans ladite ouverture de fixation (3), et qui définit une ouverture d'enfichage (26), dans laquelle une conduite de fluide (5) à raccorder peut être enfichée, dans lequel une structure d'étanchéité (46) de forme annulaire d'un seul tenant réalisée en tant que partie intégrante de l'unité de raccordement (4) est associée de manière coaxiale à l'unité de raccordement (4), qui présente une section d'étanchéité extérieure (46a) de forme annulaire prévue pour venir en appui de manière étanche au niveau de la surface périphérique intérieure (3a) de l'ouverture de fixation (3), formée au niveau de la périphérie extérieure de l'élément de maintien (34) et une section d'étanchéité intérieure (46b) de forme annulaire entourant de manière étanche la conduite de fluide (5) enfichée au niveau de sa périphérie extérieure (43), et dans lequel l'unité de raccordement (4) présente un élément de maintien (34) structuré de manière à présenter une forme annulaire, qui dispose de plusieurs sections de maintien (36) réparties tout autour de l'ouverture d'enfichage (26) et mobiles de manière radiale, qui sont réalisées respectivement pour contraindre la périphérie extérieure (43) de la conduite de fluide (5) enfichée aux fins de son immobilisation, dans lequel la structure d'étanchéité (46) est formée au moins en partie et y compris la section d'étanchéité intérieure (46b) de forme annulaire, au niveau des sections de maintien (36) mobiles de manière radiale et surmonte de manière étanche des espaces intermédiaires (38) présents entre des sections de maintien (36) adjacentes, **caractérisé en ce que** la structure d'étanchéité (46) est formée par un corps de moulage par injection élastique comme un caoutchouc formé par liaison de matière au niveau de l'élément de maintien (34) moyennant une étanchéification directement lors de sa fabrication par moulage par injection, dans lequel la section d'étanchéité extérieure (46a) présente une partie faisant saillie étanche (48) de forme annulaire orientée dans le sens opposé à la direction d'enfichage de la conduite de fluide (5) dans la direction axiale de l'unité de raccordement (4), qui peut être placée de manière axialement étanche, dans la position d'utilisation, au niveau du composant de support (2).

7. Dispositif de raccordement selon la revendication 6, **caractérisé en ce que** la section d'étanchéité extérieure (46a) est formée dans la zone se raccordant de manière axiale au niveau des sections de maintien (36), au niveau de la périphérie extérieure de l'élément de maintien (34).

8. Dispositif de raccordement selon la revendication 6 ou 7, **caractérisé en ce que** l'unité de raccordement (4) présente, au niveau de sa périphérie extérieure, une rainure de fixation (22a) de forme annulaire servant à la fixation au niveau du composant de support (2), ouverte de manière radiale, dont un flanc de rainure (24) présente la partie faisant saillie étanche (48).

9. Dispositif de raccordement selon l'une quelconque des revendications 6 à 8, **caractérisé en ce que** la section d'étanchéité intérieure (46b) est formée au niveau des surfaces intérieures (45), tournées vers l'ouverture d'enfichage (26), des sections de maintien (36).

10. Dispositif de raccordement selon l'une quelconque des revendications 6 à 9, **caractérisé en ce que** la section d'étanchéité intérieure (46b) présente au moins une lèvre étanche (47) de forme annulaire, disposée au niveau des sections de maintien (36), faisant saillie radialement vers l'intérieure, qui repose de manière étanche au niveau de la périphérie extérieure (43) de la conduite de fluide (5) enfichée.

11. Dispositif de raccordement selon l'une quelconque des revendications 1 à 10, **caractérisé en ce que** les sections de maintien (36) de l'élément de maintien (34), y compris des arêtes de serrage (42) réalisées au niveau desdites sections de maintien et pouvant être placées au niveau de la conduite de fluide (5) enfichée ou abstraction faite de ces dernières, sont enveloppées tout autour en totalité par la structure d'étanchéité (46).

12. Dispositif de raccordement selon l'une quelconque des revendications 1 à 11, **caractérisé en ce que** la structure d'étanchéité (46) fait partie intégrante d'un seul tenant d'un corps enveloppant (35) élastique comme un caoutchouc d'un seul tenant, qui est formé par liaison de matière au niveau de l'élément de maintien (34) moyennant une étanchéification directement lors de sa fabrication par moulage par injection et qui enveloppe au moins en partie l'élément de maintien (34).

13. Dispositif de raccordement selon la revendication 12, **caractérisé en ce que** l'élément de maintien (34), y compris des arêtes de serrage (42), pouvant être placées au niveau de la conduite de fluide (5) enfichée, de ses sections de maintien (36) ou abstraction faite de ces dernières, est enveloppé tout autour au moins approximativement en totalité par le corps enveloppant (35).

14. Dispositif de raccordement selon la revendication 12 ou 13, **caractérisé en ce que** le corps enveloppant (35) réalise un moyen de fixation (22) disposé de manière coaxiale au niveau de la périphérie extérieure de l'unité de raccordement (4), servant à la fixation au niveau du composant de support (2), qui est réalisé en particulier sous la forme d'une rainure de fixation (22a) de forme annulaire ouverte de manière radiale.

15. Dispositif de raccordement selon l'une quelconque des revendications 1 à 14, **caractérisé en ce que** l'élément de maintien (34) présente une section de tête (54) de forme annulaire, de laquelle plusieurs bras de maintien (55) répartis tout autour de l'ouverture d'enfichage (26) selon un espacement mutuel dépassent de manière axiale dans la même direction, qui forment respectivement une des sections de maintien (36) et qui peuvent être déformés élastiquement comme un ressort de manière radiale par rapport à la section de tête (54).

16. Dispositif de raccordement selon la revendication 15 en lien avec la revendication 14, **caractérisé en ce que** l'élément de maintien (34) est entouré de manière coaxiale par le moyen de fixation (22) dans une zone, se situant de manière axiale entre les sections de maintien (36) et la section de tête (54), des bras de maintien (55).

17. Dispositif de raccordement selon l'une quelconque des revendications 1 à 16, **caractérisé en ce qu'**est montée, dans l'unité de raccordement (4), de manière à pouvoir coulisser axialement, une douille de déclenchement (63) servant à actionner avec une action de déclenchement les sections de maintien (36), qui est entourée de manière appropriée au niveau de sa périphérie extérieure par un corps enveloppant (35) élastique comme un caoutchouc dépassant de manière axiale de l'élément de maintien (34) et formant dans le même temps la structure d'étanchéité (46), dans lequel il est fixé en particulier de manière locale au moyen d'une liaison à déclic au niveau d'une partie constitutive, mobile de manière axiale par rapport à l'élément de maintien (34), du corps enveloppant (35).

18. Dispositif de raccordement selon l'une quelconque des revendications 1 à 17, **caractérisé en ce que** l'élément de maintien (34) est fabriqué d'un seul tenant à partir d'un métal élastique comme un ressort, en particulier à partir d'acier inoxydable, dans lequel il est produit en particulier sous la forme d'une pièce estampée et pliée.

19. Dispositif de raccordement selon l'une quelconque des revendications 1 à 18, **caractérisé en ce que** l'ouverture de fixation (3) est configurée pour communiquer avec un canal de fluide (8) réalisé dans le composant de support.
